# EUROPEAN PATENT APPLICATION

(11) **EP 4 613 651 A1**
(43) Date of publication of application: **10.09.2025**
(21) Application number: 23885110.9
(22) Date of filing: 03.11.2023
(51) Int. Cl.: B64F 1/36, B64F 1/30, B64F 1/32

(54) **AIRPLANE CABIN DOOR PROTECTION APPARATUS AND METHOD, BRIDGEHEAD, GROUND DEVICE, AND ELECTRONIC DEVICE**

(30) Priority: 04.11.2022 CN 202211376904
(71) Applicant: Shenzhen CIMC-TIANDA Airport Support Ltd., Shenzhen, Guangdong 518103 (CN)
(72) Inventor: DONG, Landeng, Shenzhen, Guangdong 518103 (CN); LI, Ximing, Shenzhen, Guangdong 518103 (CN); SUN, Haifei, Shenzhen, Guangdong 518103 (CN); WEI, Feipeng, Shenzhen, Guangdong 518103 (CN); HUANG, Jianming, Shenzhen, Guangdong 518103 (CN); XIANG, Wei, Shenzhen, Guangdong 518103 (CN)
(74) Representative: Gleiss Große Schrell und Partner mbB
(86) International application number: PCT/CN2023/129681
(87) International publication number: WO 2024/094186

(57) **Abstract**

An airplane cabin door protection apparatus, comprising a deployment mechanism, a return mechanism, and a detection element. The deployment mechanism comprises a deployment portion (10) and a power conversion portion, one end of the deployment portion (10) is configured to be connected to a bridgehead platform (80), and the power conversion portion is connected to the deployment portion (10); the return mechanism comprises a return power source (30) and a return linkage portion (40), one end of the return power source (30) is configured to be connected to the bridgehead platform (80), and the other end of the return power source (30) is connected to the return linkage portion (40); the power conversion portion is capable of releasing power; the detection element is configured to detect a downward motion signal after the deployment portion (10) extends out.

## Description

### CROSS-REFERENCE TO RELATED APPLICATIONS

The present application claims priority to Chinese Patent Application No. 202211376904.5, filed on November 4, 2022, the entire contents of which are hereby incorporated by reference.

### TECHNICAL FIELD

The present application relates to an airplane cabin door protection apparatus, a protection method, a bridgehead, aviation ground device, and an electronic device.

### BACKGROUND

When aviation ground device docks with an airplane and the airplane cabin door is opened, the airplane cabin door is positioned above the floor of the bridgehead platform. During passenger boarding or cargo loading, the airplane gradually descends, causing the airplane cabin door to lower along with the airplane. This may result in the airplane cabin door pressing against the floor of the bridgehead platform, leading to damage to the airplane cabin door.

Nowadays, after aviation ground device docks with an airplane, workers typically place a safety shoe on the floor of the bridgehead platform to sense the descent of the airplane cabin door. When the aviation ground device completes docking with the airplane and the airplane cabin door is opened, if the protective action of the safety shoe is triggered, the bridgehead platform is controlled to descend a certain distance to prevent the airplane cabin door from colliding with the floor of the bridgehead platform. Before the aviation ground device is evacuated from the airplane, workers remove the safety shoe from the bottom of the airplane cabin door and return them to their original position. This manual deployment and retrieval method for safety shoe not only increases the workload of the staff but also prevents the present application of unmanned aviation ground device and related technologies.

### SUMMARY

The objective of the present application is to provide an airplane cabin door protection apparatus, a protection method, a bridgehead, and aviation ground device to alleviate the technical problem in the prior art where the manual deployment and retrieval of safety shoe increases the workload of staff.

According to a first aspect of the present application, the present application provides an airplane cabin door protection apparatus, comprising:
a deployment mechanism, the deployment mechanism including a deployment portion and a power conversion portion, wherein one end of the deployment portion is configured to connect to a bridgehead platform, and the power conversion portion is connected to the deployment portion;
a return mechanism, the return mechanism including a return power source and a return linkage portion, wherein one end of the return power source is configured to connect to the bridgehead platform, and the other end is connected to the return linkage portion, such that the return linkage portion contacts and drives the deployment portion to retract and causes the power conversion portion to store power; the power conversion portion is configured to release power to extend the deployment portion;
a detection element, the detection element being configured to detect a downward motion signal of the deployment portion after extension to determine whether an airplane cabin door protection action is triggered.

In an embodiment of the present application, the airplane cabin door protection apparatus further comprises a mounting frame configured to connect to the bridgehead platform, wherein the deployment portion, the return linkage portion, and the return power source are all connected to the mounting frame.

In an embodiment of the present application, the deployment portion includes an extension portion and a connection portion, the extension portion being located at one end of the connection portion, the other end of the connection portion being movably connected to the mounting frame, and the return linkage portion cooperating with the connection portion to drive the extension portion to move.

In an embodiment of the present application, the power conversion portion includes an elastic member, one end of the elastic member being connected to the mounting frame, and the other end of the elastic member being connected to the connection portion;
or,
the power conversion portion includes a counterweight structure, the counterweight structure being connected to the connection portion, and the counterweight structure being configured to drive the connection portion to move to cause the extension portion to extend.

In an embodiment of the present application, one end of the return power source is hinged to the mounting frame, the other end of the return power source is connected to the return linkage portion, and the return linkage portion cooperates with the connection portion to drive the deployment portion to move.

In an embodiment of the present application, the return linkage portion is provided with a pressure-retaining portion, the pressure-retaining portion being capable of abutting at least a part of the deployment portion to drive the return linkage portion to move the deployment portion and cause the power conversion portion to store power.

In an embodiment of the present application, the deployment portion further includes a linkage engagement portion connected to the connection portion; the lower surface of the return linkage portion is provided with a groove, the pressure-retaining portion being the bottom of the groove of the return linkage portion, and the bottom of the groove being capable of abutting the upper surface of the linkage engagement portion.

In an embodiment of the present application, the deployment portion further includes a linkage engagement portion provided on the connection portion, the linkage engagement portion including a notch; the pressure-retaining portion is a stop rod, and the outer surface of the stop rod is capable of abutting the notch.

In an embodiment of the present application, the airplane cabin door protection apparatus further includes a second sensor located below the detection element, the second sensor being configured to acquire a motion signal of the deployment portion moving to an activation position during extension to activate the airplane cabin door protection function.

In an embodiment of the present application, the airplane cabin door protection apparatus further includes a third sensor configured to detect whether the return mechanism is in a first preset stop position corresponding to the deployment portion after extension;
and/or, the airplane cabin door protection apparatus further includes a fourth sensor configured to detect whether the return mechanism is in a second preset stop position corresponding to the deployment portion after retraction.

In an embodiment of the present application, the airplane cabin door protection apparatus further includes a first limiter configured to limit the maximum extension height of the deployment portion;
and/or, the airplane cabin door protection apparatus further includes a second limiter configured to support and limit the deployment portion in the retracted position.

In an embodiment of the present application, the return power source includes a reciprocating drive mechanism, a torque motor, or a cable reel;
and/or, the deployment portion is provided with a bumper for contacting the airplane cabin door.

According to a second aspect of the present application, the present application further provides a bridgehead, comprising a bridgehead platform and the aforementioned airplane cabin door protection apparatus, the airplane cabin door protection apparatus being installed on the bridgehead platform, and the floor surface of the bridgehead platform being provided with an opening for the deployment portion to extend through.

According to a third aspect of the present application, the present application further provides aviation ground device, comprising a control system and the aforementioned airplane cabin door protection apparatus.

According to a fourth aspect of the present application, the present application further provides an airplane cabin door protection method, the method comprising the following steps:
acquiring a deployment control command, and the return power source responding to the deployment control command to extend the deployment portion;
acquiring a trigger signal from the detection element to determine that the airplane cabin door protection action is triggered, and issuing a door protection action execution command after the airplane cabin door protection action is triggered;
acquiring a retraction control command, and the return power source responding to the retraction control command to retract the deployment portion.

In an embodiment of the present application, before the step of acquiring the trigger signal from the detection element, the method further comprises: acquiring an activation signal to determine that the airplane cabin door protection function is activated.

In an embodiment of the present application, the step of acquiring the activation signal to determine that the airplane cabin door protection function is activated includes:
acquiring the activation signal through the detection element;
or, acquiring the activation signal through the second sensor.

According to a fifth aspect of the present application, the present application further provides an electronic device, comprising a storage unit and a processing unit, the storage unit being configured to store program code, and the processing unit being configured to invoke the program code to execute the aforementioned airplane cabin door protection method.

The advantageous effects of the present application mainly lie in:

The airplane cabin door protection apparatus provided in the present application eliminates the need for staff to perform on-site deployment or retraction, thereby reducing labor intensity. During use, the airplane cabin door protection apparatus can be installed on the bridgehead platform. In the initial state, the deployment portion is in a retracted position, and the power conversion portion stores power. During deployment, the power conversion portion releases power to extend the deployment portion. When the deployment portion is driven by external force, such as when the airplane cabin door descends to press against the deployment portion, the deployment portion moves downward. When the detection element detects the downward motion signal of the deployment portion after extension and confirms that the airplane cabin door protection action is triggered, the bridgehead platform can quickly descend a preset distance to prevent collision between the airplane cabin door and the floor surface of the bridgehead platform, thereby protecting the airplane cabin door. During retraction, the return power source drives the return linkage portion to move, causing the return linkage portion to drive the deployment portion to move and enabling the power conversion portion to store power until the deployment portion returns to the retracted position, i.e., the initial state, for subsequent reuse.

### BRIEF DESCRIPTION OF THE DRAWINGS

The above and other features and advantages of the present application will become more apparent by describing exemplary embodiments in detail with reference to the accompanying drawings.
FIG. 1 is a schematic structural diagram of an airplane cabin door protection apparatus provided by an embodiment of the present application;
FIG. 2 is a schematic structural diagram of the airplane cabin door protection apparatus provided by an embodiment of the present application from another perspective;
FIG. 3 is a schematic structural diagram of a deployment portion of the airplane cabin door protection apparatus provided by an embodiment of the present application;
FIG. 4 is a schematic diagram of the deployment portion of the airplane cabin door protection apparatus provided by an embodiment of the present application in a retracted position;
FIG. 5 is a schematic diagram of the airplane cabin door protection apparatus provided by an embodiment of the present application in an activated state of the airplane cabin door protection function;
FIG. 6 is a schematic diagram of the deployment portion of the airplane cabin door protection apparatus provided by an embodiment of the present application extending to a height H₁;
FIG. 7 is a schematic diagram of the airplane cabin door protection apparatus provided by an embodiment of the present application in a deployed state;
FIG. 8 is a schematic structural diagram of a modified example of the airplane cabin door protection apparatus provided by an embodiment of the present application;
FIG. 9 is a schematic structural diagram of a modified example of the airplane cabin door protection apparatus provided by an embodiment of the present application from another perspective;
FIG. 10 is a schematic diagram of the deployment portion of a modified example of the airplane cabin door protection apparatus provided by an embodiment of the present application in a retracted position;
FIG. 11 is a schematic diagram of the deployment portion of a modified example of the airplane cabin door protection apparatus provided by an embodiment of the present application extending to a height H₁;
FIG. 12 is a schematic diagram of the modified example of the airplane cabin door protection apparatus provided by an embodiment of the present application in a deployed state;
FIG. 13 is a schematic structural diagram of another modified example of the airplane cabin door protection apparatus provided by an embodiment of the present application;
FIG. 14 is a schematic structural diagram of a deployment mechanism of another modified example of the airplane cabin door protection apparatus provided by an embodiment of the present application;
FIG. 15 is a cross-sectional view of another modified example of the airplane cabin door protection apparatus provided by an embodiment of the present application;
FIG. 16 is a schematic structural diagram of a bridgehead provided by an embodiment of the present application;
FIG. 17 is a flowchart of an airplane cabin door protection method provided by an embodiment of the present application;
FIG. 18 is another flowchart of the airplane cabin door protection method provided by an embodiment of the present application.

Reference Numerals: 10 - deployment portion; 11 - extension portion; 12 - connection portion; 121 - plate-shaped structure; 1211 - notch; 122 - connection plate; 123 - ear plate; 13 - bumper; 14 - linkage engagement portion; 21 - torsion spring; 22 - tension spring; 23 - counterweight structure; 30 - return power source; 40 - return linkage portion; 41 - stop rod; 50 - mounting frame; 51 - first frame; 52 - second frame; 61 - first sensor; 62 - second sensor; 63 - third sensor; 64 - fourth sensor; 71 - first limiter; 72 - limiting block; 73 - stop block; 80 - bridgehead platform; 81 - floor surface; 90 - airplane cabin door.

### DETAILED DESCRIPTION

Exemplary embodiments will now be described more comprehensively with reference to the accompanying drawings. However, the exemplary embodiments may be implemented in various forms and should not be construed as being limited to the embodiments set forth herein. Although relative terms such as "on" and "below" are used in this specification to describe the positional relationship of a component of an icon relative to another component, these terms are used in this specification solely for convenience, such as according to the orientation of the example depicted in the drawings. It should be understood that if the device in the icon is flipped upside down, the component described as being "on" will become a "below" component. Other relative terms, such as "top" and "bottom," shall have analogous meanings. When a structure is described as being "on" another structure, it may mean that the structure is integrally formed on the other structure, that the structure is "directly" disposed on the other structure, or that the structure is "indirectly" disposed on the other structure via an intervening structure.

The terms "a", "an", "the", and "said" are used to indicate the existence of one or more elements/components/etc. The terms "comprises" and "has" are used to denote open-ended inclusion and mean that, in addition to the listed elements/components/etc., there may be additional elements/components/etc. Terms such as "first", "second", etc., are used solely as labels and do not impose numerical limitations on the objects they refer to.

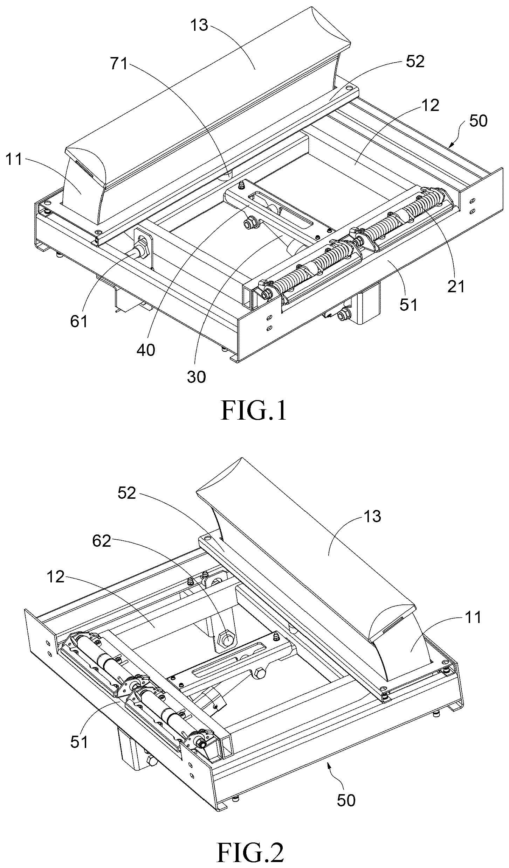

Referring to FIGS. 1 to 15, the present embodiment provides an airplane cabin door protection apparatus, comprising a deployment mechanism, a return mechanism, and a detection element. The deployment mechanism includes a deployment portion 10 and a power conversion portion, wherein one end of the deployment portion 10 is configured to connect to a bridgehead platform 80, and the power conversion portion is connected to the deployment portion 10. The return mechanism includes a return power source 30 and a return linkage portion 40, wherein one end of the return power source 30 is configured to connect to the bridgehead platform 80, and the other end of the return power source 30 is connected to the return linkage portion 40, such that the return linkage portion 40 contacts and drives the deployment portion 10 to retract and causes the power conversion portion to store power. The power conversion portion is configured to release power to extend the deployment portion 10. The detection element is configured to detect a downward motion signal of the deployment portion 10 after extension to determine whether an airplane cabin door protection action is triggered.

Exemplarily, the airplane cabin door protection apparatus has a retracted position and an extended position for implementing the airplane cabin door protection function, the detection element is configured to detect a downward motion signal after the deployment portion 10 extends out means that the detection element is configured to detect a motion signal of the deployment portion 10 moving from the extended position toward the retracted position when driven by external force, thereby determining whether the airplane cabin door protection action is triggered.

The airplane cabin door protection apparatus provided in the embodiment may automatically switch between the retracted position and the extended position, without the need for staff to perform on-site deployment or retraction and thereby reducing the labor intensity of staff. During use, the airplane cabin door protection apparatus is installed on the bridgehead platform 80 of aviation ground device. In the initial state, the deployment portion 10 is in the retracted position, and the power conversion portion stores power. During deployment, the power conversion portion automatically releases power to move the deployment portion 10 to the extended position, activating the airplane cabin door protection function. After the airplane cabin door protection function is activated, when the deployment portion 10 is driven by external force (for example, when the airplane cabin door descends and presses against the deployment portion 10), the deployment portion 10 moves toward the retracted position. When the detection element detects the downward motion signal of the deployment portion 10 after extension and confirms that the airplane cabin door protection action is triggered, the bridgehead platform 80 rapidly descends a preset distance to prevent collision between the airplane cabin door 90 and the floor surface of the bridgehead platform 80, thereby protecting the airplane cabin door 90 from damage. During retraction, the return power source 30 drives the return linkage portion 40 to move, causing the return linkage portion 40 to drive the deployment portion 10 toward the retracted position and enabling the power conversion portion to store power until the deployment portion 10 returns to the retracted position, i.e., the initial state, for subsequent reuse. The power stored in the power conversion portion may be released automatically without additional control. The return power source 30 is controlled by the control system of the aviation ground device for opening and closing, automatically or manually controlled by the control system (with physical or virtual buttons triggered by staff), without the need for staff to deploy or retract on site, thereby reducing the labor intensity of staff.

It should be noted that after the deployment portion 10 extends, when driven downward by external force, its motion direction or trajectory may be obliquely downward along a curve, vertically downward, or follow other paths, as long as it enables the deployment portion to move in a direction approaching the retracted position. During retraction, the return linkage portion 40 may directly contact and drive the deployment portion 10 to retract or indirectly contact and drive the deployment portion 10 to retract.

In an embodiment, the airplane cabin door protection apparatus further comprises a mounting frame 50 configured to connect to the bridgehead platform 80. The deployment portion 10, return linkage portion 40, and return power source 30 are all connected to the mounting frame 50.

In some embodiments, the mounting frame 50 may be a single frame structure. During use, the mounting frame 50 is installed on the bridgehead platform 80 to complete the installation of the airplane cabin door protection apparatus. It should be noted that the power conversion portion may have various forms, and its installation position may be adjusted according to its structural configuration, provided that it enables energy storage when the deployment portion 10 moves toward the retracted position and energy release when the deployment portion 10 moves toward the extended position.

In other embodiments, the deployment portion 10, return linkage portion 40, and return power source 30 may all be installed on the frame of the bridgehead platform 80. It should be understood that the mounting frame 50 may also be integrally formed with the frame of the bridgehead platform 80.

Exemplarily, referring to FIG. 1, the mounting frame 50 may be a rectangular frame comprising first frame 51 and second frame 52 opposing with each other. One end of the power conversion portion is connected to the first frame 51, and the other end of the power conversion portion is connected to the deployment portion 10. The second frame 52 is provided with an opening for the deployment portion 10 to extend or retract through.

In the embodiment, the retracted position is located below or approximately aligned with the mounting frame 50, provided that the deployment portion 10 does not interfere with other components in the retracted position. The extended position is located above the mounting frame 50. When the free end of the deployment portion 10 extends through the opening and reaches the maximum extension height, the deployment portion 10 is considered to be in the extended position, at which time the airplane cabin door protection function is already activated.

It should be noted that the structure of the mounting frame 50 is not limited to the above examples.

In an embodiment, the deployment portion 10 includes an extension portion 11 and a connection portion 12. The extension portion 11 is located at one end of the connection portion 12, and the other end of the connection portion 12 is movably connected to the mounting frame 50. The return linkage portion 40 cooperates with the connection portion 12 to drive the extension portion 11 to move.

The extension portion 11 is connected to one end of the connection portion 12, and the other end of the connection portion 12 is hinged to the first frame 51 of the mounting frame 50. When the return power source 30 drives the return linkage portion 40 to move, the return linkage portion 40 cooperates with the connection portion 12 to drive the extension portion 11 to the retracted position, and enable the power conversion portion to store power.

In an embodiment, the deployment portion 10 is provided with a bumper 13 for contacting the airplane cabin door 90. The bumper 13 is connected to the extension portion 11 and located at the free end of the extension portion 11. Exemplarily, the bumper 13 is made of rubber and has a curved surface matching the arc of the airplane cabin door's underside. When the extension portion 11 extends through the opening to its maximum height, the deployment portion 10 is in the extended position, and the airplane cabin door protection function is activated.

In one possible design, the power conversion portion includes an elastic member, with one end connected to the mounting frame 50 and the other end to the connection portion 12.

In a specific embodiment, as shown in FIG. 1, the elastic member includes a torsion spring 21. One elastic arm of the torsion spring 21 is connected to the mounting frame 50, and the other elastic arm of the torsion spring 21 is connected to the connection portion 12.

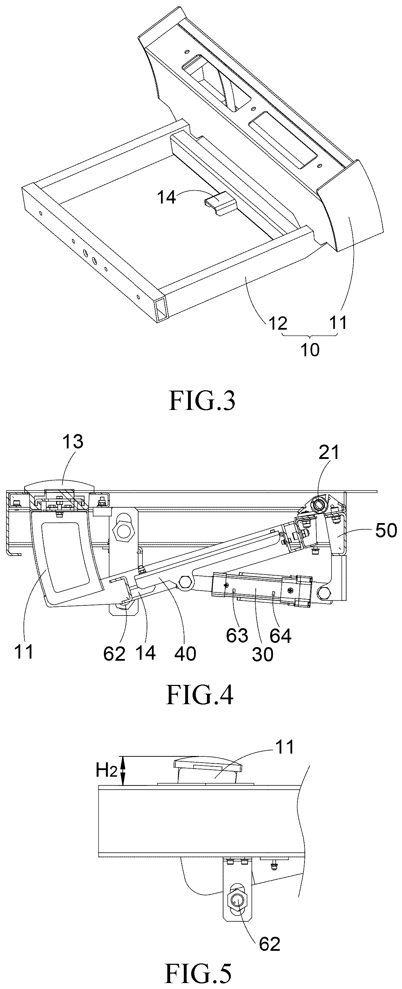

Exemplarily, as shown in FIG. 3, the connection portion 12 is a rectangular frame structure. One elastic arm of the torsion spring 21 connects to the first frame 51 of the mounting frame 50, and the other elastic arm of the torsion spring 21 connects to the end of the connection portion 12 away from the extension portion 11. As shown in FIG. 4, in the initial state, the deployment portion 10 is in the retracted position, and the torsion spring 21 is deformed to store energy. During deployment, the torsion spring 21 automatically releases energy, causing the deployment portion 10 to move and the extension portion 11 to extend from the opening until the free end of the deployment portion 10 reaches the extended position.

In some embodiments, the number of torsion springs 21 may be multiple, and multiple torsion springs 21 may be arranged along the length direction of the first frame 51 at intervals.

It should be noted that in this design, the elastic member may also be a spring hinge, which may be installed similarly to the torsion spring, which will not be redundantly described here.

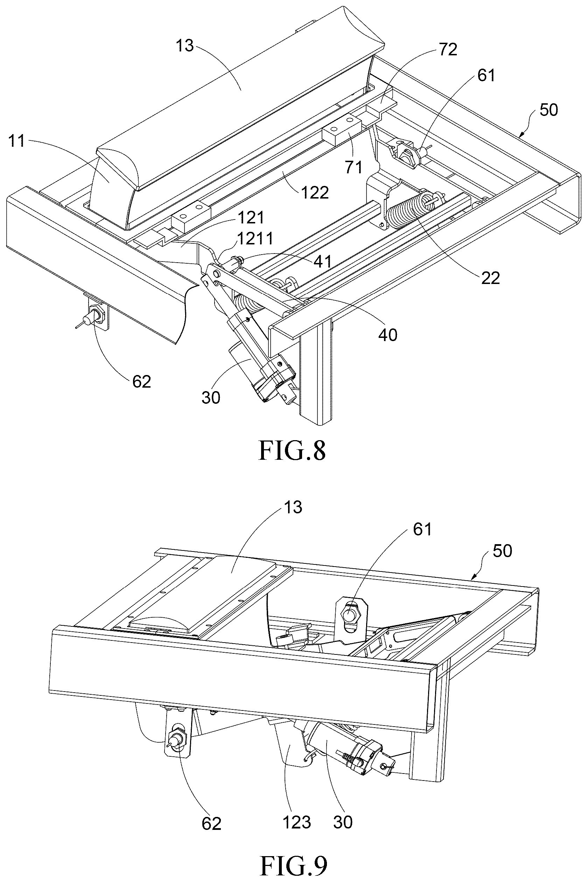

In another specific embodiment, as shown in FIG. 8, the elastic member includes a tension spring 22. One end of the tension spring 22 is connected to the mounting frame 50, and the other end of the tension spring 22 is connected to the connection portion 12. When the deployment portion 10 is in the retracted position, the tension spring 22 is stretched to store energy.

It should be noted that the tension spring in the above embodiment may also be replaced with a gas spring.

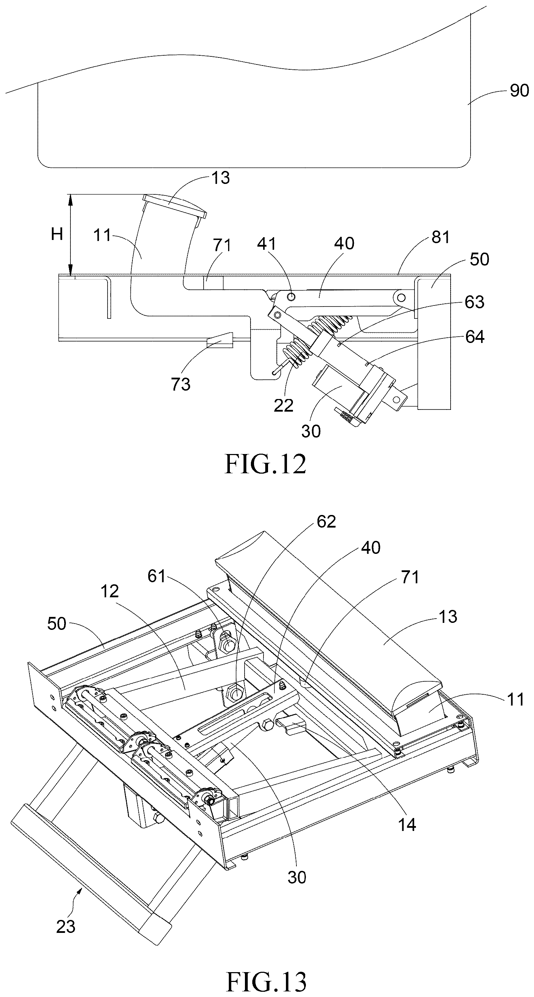

In another possible design, as shown in FIGS. 13 to 15, the power conversion portion includes a counterweight structure 23 connected to the connection portion 12. The counterweight structure 23 drives the connection portion 12 to rotate, causing the extension portion 11 to extend.

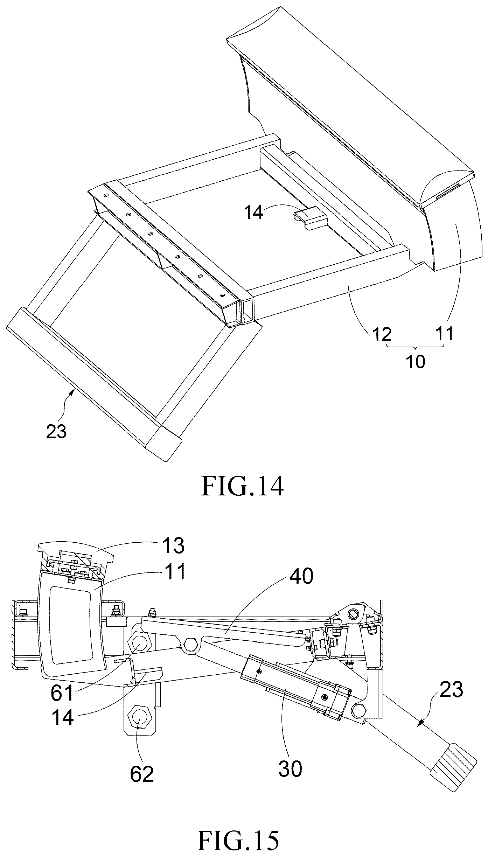

As shown in FIG. 14, the counterweight structure 23 is connected to the side of the connection portion 12 away from the extension portion 11. By configuring the weight and center of gravity of the counterweight structure 23 appropriately, the extension portion 11 has a tendency to extend outward through the opening under the gravitational force of the counterweight structure 23.

In an embodiment, one end of the return power source 30 is hinged to the mounting frame 50, and the other end of the return power source 30 is connected to the return linkage portion 40. The return linkage portion 40 cooperates with the connection portion 12 to drive the deployment portion 10 to move.

In some embodiments, the return power source 30 includes a reciprocating drive mechanism, which may be an electric push rod, pneumatic cylinder, hydraulic cylinder, linear reciprocating drive mechanism such as a lead screw and nut, or other curved reciprocating drive mechanisms.

Exemplarily, as shown in FIGS. 1, 4, 6, and 7, the return power source 30 is an electric push rod. One end of the electric push rod is hinged to the first frame 51 of the mounting frame 50, and the other end of the electric push rod is hinged to the return linkage portion 40. One end of the return linkage portion 40 is hinged to the end of the connection portion 12 away from the extension portion 11. When the electric push rod retracts, it drives the return linkage portion 40 to rotate about the hinge axis between the return linkage portion 40 and the connection portion 12, causing the other end of the return linkage portion 40 to cooperate with the connection portion 12 and drive the extension portion 11 downward below the mounting frame 50 until the extension portion 11 reaches the retracted position.

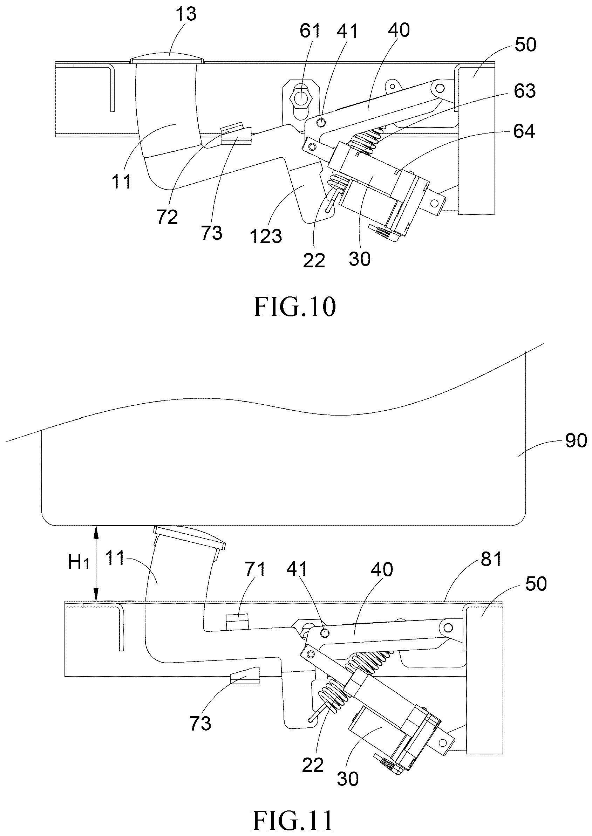

Of course, as shown in FIGS. 8 and 10, one end of the return linkage portion 40 may also be hinged to the mounting frame 50, or the return linkage portion 40 may only connect to the return power source 30.

Exemplarily, as shown in FIG. 1, the electric push rod is centrally positioned on the mounting frame 50 to ensure balanced force distribution and improve deployment/retraction stability.

Exemplarily, when the return power source 30 is a lead screw and nut, it includes a motor, lead screw, and nut. The lead screw is installed horizontally, and the nut is a wedge block with an abutting inclined surface. The wedge block is positioned above the connection portion 12, which has a inclined block matching the wedge block with an abutting inclined surface. When the motor drives the lead screw to rotate in a first direction about its axis, the nut moves away from the extension portion 11, and the inclined surface of the wedge block presses against the inclined block of the connection portion 12, thereby retracting the extension portion 11 through the opening.

It should be noted that in the accompanying drawings and the embodiment, the deployment portion 10 is primarily exemplified as being installed in a hinged manner, with its motion trajectory being curved. In other embodiments, the motion trajectory of the deployment portion 10 may also be linear. For example, the deployment portion 10 may move vertically relative to the mounting frame 50 to position the extension portion 11 in the deployed or retracted position.

It should be noted that the return power source 30 may alternatively be a torque motor or a cable reel.

In one embodiment, the return linkage portion 40 is provided with a pressure-retaining portion that can abut at least part of the deployment mechanism, enabling the return linkage portion 40 to drive the deployment portion 10 to move and causing the power conversion portion to store power.

In some embodiments, the return linkage portion 40 is rod-shaped. One end of the return linkage portion 40 is hinged to the end of the connection portion 12 away from the extension portion 11, while the other end of the return linkage portion 40 is close to the extension portion 11. The deployment mechanism further includes a linkage engagement portion 14 connected to the connection portion 12, e.g., fixedly connected to the connection portion 12.

In a specific embodiment, as shown in FIGS. 2 to 4, the lower surface of the return linkage portion 40 is provided with a groove, and the pressure-retaining portion is the bottom of the groove at the other end of the return linkage portion 40. When the return power source 30 retracts, it drives the return linkage portion 40 to rotate about the hinge axis between the return linkage portion 40 and the connection portion 12, causing the bottom of the groove at the other end of the return linkage portion 40 to abut the upper surface of the linkage engagement portion 14. As the return power source 30 continues to retract, the pressure-retaining portion indirectly engages with the connection portion 12 via the linkage engagement portion 14, thereby driving the extension portion 11 downward below the mounting frame 50 until the extension portion 11 reaches the retracted position. It should be noted that the linkage engagement portion 14 may be integrally formed with the connection portion 12, at this time, the engagement between the return linkage portion 40 and the connection portion 12 being direct engagement.

In another specific embodiment, as shown in FIGS. 8 to 10, the pressure-retaining portion is a stop rod 41 connected to the return linkage portion 40. Exemplarily, the axis of the stop rod 41 is perpendicular to the plate surface of the return linkage portion 40. As shown in FIG. 8, the connection portion includes a plate-shaped structure 121. Exemplarily, there are two plate-shaped structures 121 spaced apart along the length direction of the first frame 51 of the mounting frame 50. The two plate-shaped structures 121 are connected by a connection plate 122. One or two return mechanisms may be provided, and two power conversion portions may be provided, each return mechanism and power conversion portion is coordinated and linked with one plate-shaped structure 121. The deployment portion 10 further includes a linkage engagement portion provided on the connection portion. Exemplarily, the upper edge of the plate-shaped structure 121 is provided with a notch 1211, which serves as the linkage engagement portion. When the return power source 30 retracts, it drives the return linkage portion 40 to rotate, causing the outer surface of the stop rod 41 to abut the notch 1211. As the return power source 30 further retracts, the stop rod 41 indirectly engages with the notch 1211 on the plate-shaped structure 121, and as the return power source 30 continues to retract, the stop rod 41 portion indirectly engages with the notch 1211 on the plate-shaped structure 121, thereby driving the extension portion 11 downward below the mounting frame 50 until the extension portion 11 reaches the retracted position.

In some embodiments, as shown in FIG. 9, the plate-shaped structure 121 is integrally formed with a downward-extending ear plate 123. One end of the elastic member is connected to the mounting frame 50, and the other end is connected to the ear plate 123.

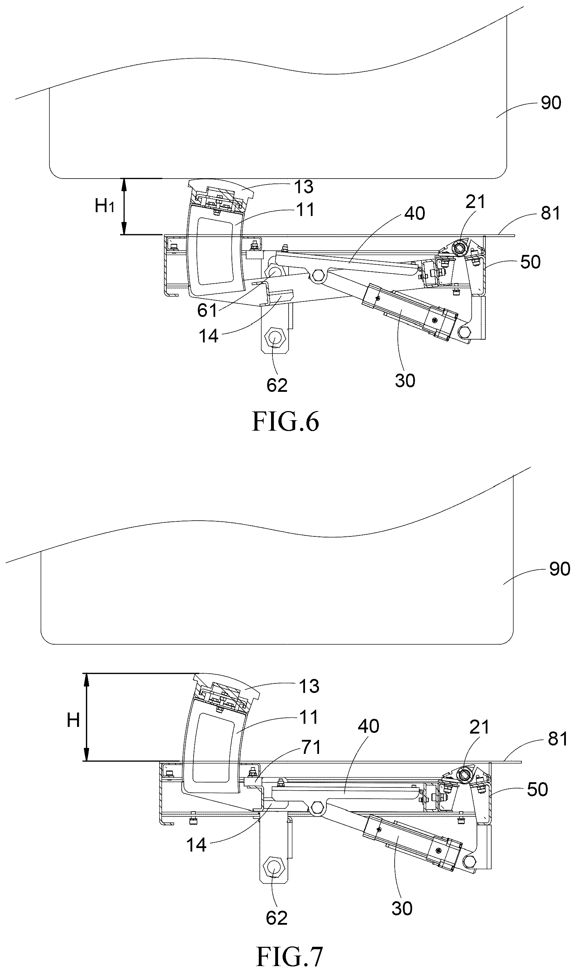

As shown in FIG. 6, the return linkage portion 40 and the linkage engagement portion 14 are movably engaged. After the airplane cabin door protection function is activated, when the airplane cabin door presses the extension portion 11 to move toward the retracted position, the linkage engagement portion 14 disengages from the return linkage portion 40. Similarly, as shown in FIG. 8, the stop rod 41 and the notch 1211 of the plate-shaped structure 121 are also movably engaged.

Additionally, it should be noted that the structure of the return linkage portion 40 is not limited to the above two examples, and the structure of the pressure-retaining portion is not limited to the above two examples.

In one embodiment, the detection element includes a first sensor 61 configured to detect the motion signal of the deployment portion 10 moving from the extended position to the retracted position after the airplane cabin door protection function is activated, thereby confirming the protection action is triggered.

Exemplarily, taking the elastic member as a torsion spring 21 , as shown in FIGS. 1, 6, and 7, the first sensor 61 is mounted on the mounting frame 50. The torsion spring 21 releases energy to drive the extension portion 11 to extend through the opening. When the extension portion 11 moves to the position that the free end of the extension portion 11 reaches a first preset distance H₁ from the floor surface 81 of the bridgehead platform 80, the first sensor 61 outputs a first signal, at which point the airplane cabin door protection function is activated. The extension portion 11 continues to extend until it reaches the maximum height H, H₁ < H,the first sensor 61 maintains the first signal, or it outputs the first signal continuously as the distance between the free end of the extension portion 11 and the floor surface 81 changes from H to H₁. After activation, when the bumper 13 on the extension portion 11 is driven by external force (e.g., the airplane cabin door descends and presses against the bumper 13), the extension portion 11 moves toward the retracted position. At this time, the distance between the free end of the extension portion 11 and the floor surface 81 decreases. When this distance becomes less than H₁, the first sensor 61 outputs a second signal, indicating a change in the sensor's output. The first sensor 61 thereby detects the deployment portion 10 moving from the extended position to the retracted position, confirming the triggering of the protection action.

Similarly, as shown in FIGS. 11 and 12, when the elastic member includes a tension spring 22, the above motion process applies equally and will not be redundantly described.

Exemplarily, the first sensor 61 is positioned such that it outputs the first signal when obscured by the deployment portion 10 and it outputs the second signal when unobscured by the deployment portion 10.

It should be noted that when the distance between the free end of the extension portion 11 and the floor surface 81 of the bridgehead platform 80 reaches the first preset distance H₁, and during its movement to the distance H, the first sensor 61 remains obscured by the deployment portion 10.

In one embodiment, the airplane cabin door protection apparatus further includes a second sensor 62 located below the detection element (i.e., the first sensor 61). The second sensor 62 is configured to acquire the motion signal of the deployment portion 10 moving to an activation position during extension, thereby activating the airplane cabin door protection function. Wherein, the activation position refers to the position where the deployment portion 10 moves upward by a second preset distance H₂ from the retracted position. It should be noted that "upward motion" refers to the deployment portion moving toward the extended position, with its direction or trajectory being obliquely upward along a curve, vertically upward, or following other paths.

Exemplarily, referring to FIGS. 2 and 6, the second sensor 62 is mounted on the mounting frame 50. The second sensor 62 is positioned below the first sensor 61. The second sensor 62 and first sensor 61 may be installed on the same side of the mounting frame 50 or on opposite sides. When the deployment portion 10 is in the retracted position, the second sensor 62 outputs a third signal. As shown in FIG. 5, during deployment, when the extension portion 11 extends through the opening and moves until the distance between its free end and the floor surface 81 of the bridgehead platform 80 reaches a second preset distance H₂ (H₂ < H₁), the second sensor 62 outputs a fourth signal, indicating a change in its output. At this time, the airplane cabin door protection function is confirmed to be activated (either instantaneously or after a preset delay). The signal change from the first sensor 61 may further validate whether the deployment portion 10 has reached the extended position. It is emphasized that the above description of the positions and signal applications of the first and second sensors is exemplary and non-limiting. In other embodiments, installation positions and signal logic may be adjusted based on control requirements.

Exemplarily, the second sensor 62 is positioned such that it outputs the third signal when obscured by the deployment portion 10 and it outputs the fourth signal when unobscured by the deployment portion 10.

It should be noted that when the distance between the free end of the extension portion 11 and the floor surface 81 reaches the second preset distance H₂, the second sensor 62 is unobscured by the deployment portion 10. Before reaching H₂, the second sensor 62 remains obscured by the deployment portion 10 as it moves from the initial position.

Exemplarily, both the first sensor 61 and second sensor 62 may be proximity switches.

In one embodiment, the airplane cabin door protection apparatus further includes a third sensor 63 and a fourth sensor 64. The third sensor 63 detects whether the return mechanism is in a first preset stop position corresponding to the deployment portion 10 after extension. The fourth sensor 64 detects whether the return mechanism is in a second preset stop position corresponding to the deployment portion 10 after retraction.

In some embodiments, as shown in FIG. 4, the third sensor 63 and fourth sensor 64 are built into the electric push rod.

Exemplarily, when the electric push rod extends to its maximum length, the deployment is completed. At this time, the electric push rod is in the first preset stop position, and the third sensor 63 is triggered; When the electric push rod is retracted to its minimum length, the retraction is completed. At this time, the electric push rod is in the second preset stop position, and the fourth sensor 64 is triggered.

In other embodiments, the third sensor 63 and fourth sensor 64 may be installed on the mounting frame 50 or bridgehead platform 80 at appropriate positions, provided their functionality is achieved.

It should be noted that either the third sensor 63 or fourth sensor 64 may be optionally installed.

In some embodiments, the airplane cabin door protection apparatus further includes a first limiter 71 to restrict the maximum extension height of the deployment portion 10. Exemplarily, as shown in FIG. 1, the first limiter 71 is mounted on the lower surface of the mounting frame 50. During the extension portion 11 extending outward through the opening, the lower surface of the first limiter 71 contacts the upper surface of the connection portion 12. After contact, the extension portion 11 will stop extending, thereby limiting the maximum height of the extension portion 11. At this time, the distance between the free end of the extension portion 11 and the floor surface 81 of the bridgehead platform 80 is H.

It should be noted that the first limiter 71 may alternatively be installed on the upper surface of the connection portion 12, where the upper surface of the first limiter 71 contacts the lower surface of the bridgehead platform 80. Of course, the first limiter 71 may also be mounted on the lower surface of the bridgehead platform 80.

As shown in FIG. 8, the first limiter 71 is installed on the connection plate 122. During the extension portion 11 extending outward through the opening, the upper surface of the first limiter 71 contacts the lower surface of the bridgehead platform 80. After contact, the extension portion 11 will stop extending, thereby limiting the maximum height of the extension portion 11. At this time, the distance between the free end of the extension portion 11 and the floor surface 81 of the bridgehead platform 80 is H.

In other embodiments, the airplane cabin door protection apparatus includes a second limiter configured to support and limit the deployment portion 10 in the retracted position. Exemplarily, referring to FIG. 4, the second limiter may be a portion of the extension portion 11 protruding beyond its outer edge. During retraction, the lower surface of the protruding portion of the extension portion 11 abuts the floor surface 81 of the bridgehead platform 80. At this time, the extension portion 11 is in the retracted position, and the contact between the extension portion 11 and the floor surface 81 of the bridgehead platform 80 provides support and limitation for the deployment portion 10, preventing the deployment portion 10 from continuing to move downward below the mounting frame 50.

Exemplarily, referring to FIG. 10, the second limiter includes a limiting block 72 and a stop block 73. The limiting block 72 is installed on the connection plate 122, and the stop block 73 is installed on the mounting frame 50. During retraction, the lower surface of the limiting block 72 abuts the upper surface of the stop block 73. At this time, the extension portion 11 is in the retracted position, and the stop block 73 provides support and limitation for the deployment portion 10, preventing the deployment portion 10 from continuing to move downward below the mounting frame 50.

It should be noted that the first limiter 71 and the second limiter may be implemented simultaneously. It should be noted that the airplane cabin door protection apparatus can function as an independent system integrated into aviation ground device (e.g., boarding bridges) under various control modes and operational conditions. Exemplarily, the airplane cabin door protection apparatus can be used via a local control panel on the boarding bridge in local control mode; it can also be used in fully automated docking control mode when combined with a door status detection device; or it can be operated via a remote control panel in the boarding bridge's remote control mode. Wherein, the local control panel, door status detection device, and remote control panel are all prior arts.

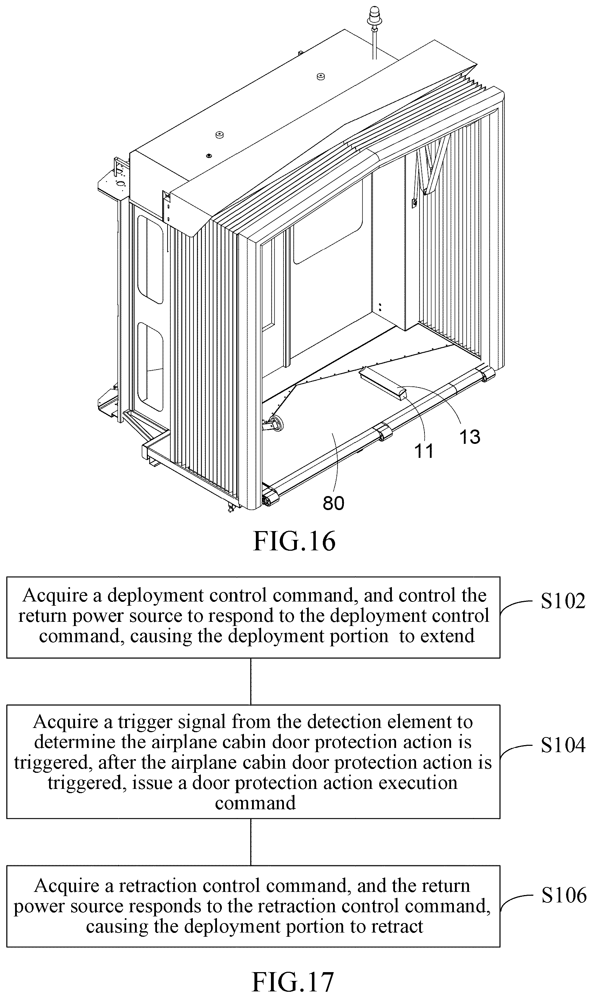

Referring to FIG. 16, the present embodiment further provides a bridgehead, comprising the bridgehead platform 80 and the airplane cabin door protection apparatus described in the embodiment. The airplane cabin door protection apparatus is installed on the bridgehead platform 80, and the floor surface of the bridgehead platform 80 is provided with an opening for the deployment portion 10 to extend through.

The bridgehead provided in the embodiment, by utilizing the airplane cabin door protection apparatus of the embodiment, eliminates the need for staff to deploy or retract the airplane cabin door protection apparatus on site, thereby reducing the labor intensity of staff. In the initial state, the deployment portion 10 is in the retracted position, and the power conversion portion stores power. During deployment, the power conversion portion releases power to move the deployment portion 10 to the extended position, activating the airplane cabin door protection function during the deployment process. After the airplane cabin door protection function is activated, when the deployment portion 10 is driven by external force (e.g., when the airplane cabin door descends and presses against the deployment portion 10), the deployment portion 10 moves toward the retracted position. When the detection element detects the downward motion signal of the deployment portion 10 after extension and confirms that the airplane cabin door protection action is triggered, the bridgehead platform 80 rapidly descends a preset distance to prevent collision between the airplane cabin door 90 and the floor surface 81 of the bridgehead platform 80, thereby protecting the airplane cabin door 90. During retraction, the return power source 30 drives the return linkage portion 40 to move, causing the return linkage portion 40 to drive the deployment portion 10 to move and enabling the power conversion portion to store power until the deployment portion 10 returns to the retracted position, i.e., the initial state, for subsequent reuse.

In one embodiment, the aviation ground device equipped with this bridgehead further includes a control system. When the airplane cabin door protection function is activated, and the detection element determines that the airplane cabin door protection action is triggered by detecting the downward motion signal of the deployment portion 10 after extension, the control system controls the bridgehead platform 80 to rapidly descend the preset distance, preventing collision between the airplane cabin door 90 and the floor surface 81 of the bridgehead platform 80, thereby protecting the airplane cabin door 90. Additionally, the return power source 30 can be controlled to open or close by the control system.

Exemplarily, the control system may be a PLC control system.

In one embodiment, the bridgehead is equipped with a video acquisition device (not shown in the figures). The video signals collected by the device are transmitted to video displays in a remote control room, where a remote control panel is installed. The remote control panel includes deployment and retraction buttons (physical or virtual). The deployment button sends deployment control commands to the control system, and the retraction button sends retraction control commands. Remote operators in the control room can observe the docking status between the bridgehead and the airplane, as well as the opening or closing status of the airplane cabin door 90, via the video displays. When the remote operator confirms that conditions for deployment or retraction of the airplane cabin door protection apparatus are met via the video displays, they trigger the deployment or retraction buttons to complete the remote deployment or retraction of the airplane cabin door protection apparatus.

The embodiment further provides aviation ground device, comprising the control system and the airplane cabin door protection apparatus described in the embodiment.

By utilizing the airplane cabin door protection apparatus of the embodiment, the aviation ground device of the embodiment eliminates the need for on-site manual deployment or retraction of the airplane cabin door protection apparatus by staff, reducing their labor intensity.

In one embodiment, the aviation ground device may be a boarding bridge incorporating the bridgehead of the embodiment.

In other embodiments, the aviation ground device may be any type of equipment that interfaces with airplane, such as boarding stairs, passenger buses, boarding vehicles, catering trucks, or cargo loaders.

The present embodiment further provides an airplane cabin door protection method, applied to the airplane cabin door protection apparatus. Referring to FIG. 17, the method includes the following steps:
Step S102: Acquire a deployment control command, and control the return power source 30 to respond to the deployment control command, causing the deployment portion 10 to extend.
Step S104: Acquire a trigger signal from the detection element to determine the airplane cabin door protection action is triggered. After the action is triggered, issue a door protection action execution command.
Step S106: Acquire a retraction control command, and the return power source 30 responds to the retraction control command, causing the deployment portion 10 to retract.

The airplane cabin door protection method provided in the embodiment automatically deploys or retracts the deployment portion 10 based on the acquired deployment or retraction control commands. Moreover, when the airplane cabin door protection apparatus enters the deployed state, it can determine whether the airplane cabin door protection action is triggered by acquiring the trigger signal from the detection element, thereby sensing the descent of the airplane cabin door. When it is detected that the descent of the airplane cabin door 90 triggers the airplane cabin door protection action, the airplane cabin door protection apparatus sends the door protection action execution command to the control system, which controls the bridgehead platform 80 to descend rapidly, thereby protecting the airplane cabin door. After docking is completed, the retraction control command is acquired, and the return power source 30 responds to the retraction control command to automatically retract the deployment portion 10.

In one embodiment, before the step of acquiring the trigger signal from the detection element, the airplane cabin door protection method further includes:
Step S103: Acquire an activation signal to determine the airplane cabin door protection function is activated.

In some embodiments, the activation signal may be acquired through the detection element to determine whether the airplane cabin door protection function is activated.

In other embodiments, the activation signal may also be acquired through the second sensor to determine whether the airplane cabin door protection function is activated.

Exemplarily, the airplane cabin door protection method provided in the embodiment is applied to the airplane cabin door protection apparatus of the embodiment. The following will take the example of using the return power source 30 as an electric push rod, the power conversion portion as a torsion spring 21, and the detection element as the first sensor 61 to illustrate the airplane cabin door protection method of the embodiment.

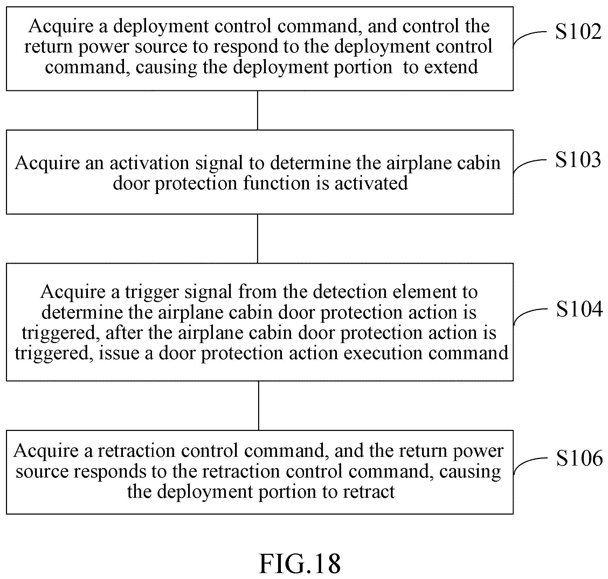

Referring to FIG. 18, the airplane cabin door protection method includes the following steps:
Step S102: Acquire a deployment control command, and control the return power source 30 to respond to the deployment control command, causing the deployment portion 10 to extend.
Step S103: Acquire an activation signal to determine whether the airplane cabin door protection function is activated.
Step S104: Acquire a trigger signal from the detection element to determine whether the airplane cabin door protection action is triggered. After the airplane cabin door protection action is triggered, issue a door protection action execution command.
Step S106: Acquire a retraction control command, and the return power source 30 responds to the retraction control command, causing the deployment portion 10 to retract.

Specifically, in the initial state, the deployment portion 10 is in the retracted position, i.e., the extension portion 11 is located below the mounting frame 50, and the torsion spring 21 is deformed to store energy. At this time, the second sensor 62 is obscured by the deployment portion 10.

In Step S102, the acquired deployment control command may be issued by a local control panel, an automatic control system, or a remote control panel. After receiving the deployment control command, the electric push rod is controlled to execute the deployment control command and extends. The torsion spring 21 releases energy, causing the deployment portion 10 to move and the extension portion 11 to extend through the opening to the extended position.

When the electric push rod extends to its maximum length, deployment is completed. As shown in Table 1, upon deployment completion, the first sensor 61 and third sensor 63 are triggered, while the second sensor 62 and fourth sensor 64 remain untriggered.

In Step S103, signals from the second sensor 62, third sensor 63, and fourth sensor 64 are received. In one implementation, the method to acquire the activation signal and determine whether the airplane cabin door protection function is activated is as follows: The activation signal is acquired through the second sensor 62. As shown in FIG. 5, during the extension of the deployment portion 10, when the extension portion 11 extends through the opening and moves until the distance between its free end and the floor surface of the bridgehead platform 80 is greater than or equal to the second preset distance H₂, the detection signal of the second sensor 62 changes. This change may be a transition from a triggered to a non-triggered state or vice versa. As shown in Table 1, in the embodiment, the second sensor 62 transitions from a triggered to a non-triggered state. At this time, the airplane cabin door protection function is confirmed to be activated. As shown in Table 1, when the airplane cabin door protection function is activated, the second sensor 62, third sensor 63, and fourth sensor 64 are all untriggered.

In other embodiments, the method to acquire the activation signal and determine whether the airplane cabin door protection function is activated may also be: acquiring the activation signal through the first sensor 61. As shown in FIG. 6, when the extension portion 11 extends through the opening and moves until the first sensor 61 is obscured by the deployment portion 10 (i.e., when the distance between the free end of the extension portion 11 and the floor surface of the bridgehead platform 80 reaches the first preset distance H₁), the airplane cabin door protection function is confirmed to be activated. When the airplane cabin door protection function is activated, the first sensor 61 is triggered, while the second sensor 62, third sensor 63, and fourth sensor 64 remain untriggered.

In Step S104, after the airplane cabin door protection function is activated, signals from the first sensor 61, third sensor 63, and fourth sensor 64 are received to determine whether the airplane cabin door protection action is triggered. After the airplane cabin door protection function is activated, when the bumper 13 on the extension portion 11 is driven by external force (e.g., the airplane cabin door descends and presses against the bumper 13), the extension portion 11 moves toward the retracted position. At this time, the distance between the free end of the extension portion 11 and the floor surface of the bridgehead platform 80 decreases. When this distance becomes less than H₁, the first sensor 61 is no longer obscured by the deployment portion 10, i.e. a change in the first sensor 61's output signal. The first sensor 61 detects the deployment portion 10 moving from the extended position to the retracted position, confirming that the airplane cabin door protection action is triggered. As shown in Table 1, when the protection action is triggered, the first sensor 61 and fourth sensor 64 are untriggered, while the third sensor 63 is triggered.

After the airplane cabin door protection action is triggered, the cabin door protection action execution command is issued, controlling the bridgehead platform 80 to rapidly descend a preset distance to prevent damage caused by the collision between the airplane cabin door 90 and the floor surface of the bridgehead platform 80, thereby protecting the airplane cabin door 90. Exemplarily, The rapid descent time lasts for 1 second, and automatically interrupt and stop descending after rapid descent. Subsequently, under the elastic force of the torsion spring 21, the extension portion 11 extends upward again to restore the deployed state.

In Step S106, the retraction control command may be issued by the local control panel, automatic control system, or remote control panel. Upon receiving the retraction control command, a retraction execution command is sent to the electric push rod. As shown in FIG. 4, the electric push rod retracts, driving the return linkage portion 40 to rotate. The bottom of the groove at the other end of the return linkage portion 40 abuts the upper surface of the linkage engagement portion 14. As the electric push rod further retracts, the pressure-retaining portion engages with the connection portion 12 via pressing the linkage engagement portion 14, driving the extension portion 11 downward below the mounting frame 50 until the extension portion 11 returns to the retracted position (i.e., the initial state) for subsequent reuse.

It should be noted that after completing Step S102 and before proceeding to Step S106, if the airplane cabin door 90 repeatedly descends and presses the bumper 13, Step S104 may be repeated to protect the airplane cabin door 90 throughout the entire docking process.

**Table 1 State of the Electric Push Rod and Sensors**

| State of the protection device | Electric push rod | First sensor 61 | Second sensor 62 | Third sensor 63 | Fourth sensor 64 |
|---|---|---|---|---|---|
| deployed | extend to maximum length | 1 | 0 | 1 | 0 |
| retracted | retract to minimum length | 0 | 1 | 0 | 1 |
| protection function is activated | extend | - | 0 | 0 | 0 |
| protection action is triggered | extend to maximum length | 0 | - | 1 | 0 |

In Table 1: "1" indicates the corresponding sensor is triggered (i.e., obscured by the deployment portion 10); "0" indicates the corresponding sensor is untriggered (i.e., unobscured by the deployment portion 10); "-" indicates the corresponding sensor is irrelevant.

The embodiment further provides an electronic device, comprising a storage unit and a processing unit. The storage unit is configured to store program code, and the processing unit is configured to invoke the program code to execute the airplane cabin door protection method provided in the embodiment.

The electronic device is embodied as a general-purpose computing device. The assemblies of the electronic device include, but are not limited to: at least one above-mentioned processing unit, at least one above-mentioned storage unit, and a bus connecting different system assemblies (including the storage and processing units).

The storage unit stores program code executable by the processing unit, enabling the processing unit to perform the steps, according to various exemplary embodiments of the present application, described in the "Exemplary Method" section of this specification. For example, the processing unit may execute the following steps from the above-mentioned method embodiment:
Step S102: Acquire a deployment control command, and control the return power source 30 to respond to the deployment control command, causing the deployment portion 10 to extend.
Step S104: Acquire a trigger signal from the detection element to determine whether the airplane cabin door protection action is triggered. After the airplane cabin door protection action is triggered, issue a cabin door protection action execution command.
Step S106: Acquire a retraction control command, and the return power source 30 responds to the retraction control command, causing the deployment portion 10 to retract.

The storage unit may include a readable medium in the form of a volatile storage unit, and the storage unit may also include a program/utility having a set (at least one) of program modules. The bus may represent one or more types of several kinds of bus architectures, including a storage unit bus or storage unit controller, a peripheral bus, a graphics acceleration port, a processing unit, or a local bus using any bus structure among multiple bus architectures.

The electronic device may also communicate with one or more external devices (e.g., a keyboard, a pointing device, a Bluetooth device, etc.), one or more devices enabling user interaction with the electronic device, and/or any device enabling the electronic device to communicate with one or more other computing devices (e.g., a router, a modem, etc.). Such communication may be performed via an input/output (I/O) interface. Additionally, the electronic device may communicate with one or more networks (e.g., a Local Area Network (LAN), a Wide Area Network (WAN), and/or a public network such as the Internet) via a network adapter. It should be noted that although the detailed description above mentions several modules or units of the device for action execution, such division is not mandatory. In practice, according to the embodiments of the present application, the features and functions of two or more modules or units described above may be embodied in a single module or unit. Conversely, the features and functions of one module or unit described above may be further divided and embodied by multiple modules or units.

Furthermore, although the steps of the method in this application are described in a specific order in the drawings, this does not require or imply that these steps must be executed in that specific order, or that all illustrated steps must be executed to achieve desired results. Additionally or alternatively, some steps may be omitted, multiple steps may be merged into one step for execution, and/or one step may be decomposed into multiple steps for execution.

Through the description of the above embodiments, those skilled in the art will readily understand that the exemplary embodiments described herein may be implemented by software or by a combination of software and necessary hardware. Therefore, the technical solutions according to the embodiments of the present application may be embodied in the form of a software product, which may be stored in a non-volatile storage medium (such as a CD-ROM, USB drive, portable hard disk, etc.) or on a network. The software product includes several instructions to enable a computing device (e.g., a personal computer, server, mobile terminal, or network device) to execute the method according to the embodiments of the present application.

Finally, it should be noted: The above embodiments are merely intended to illustrate the technical solutions of the present application, not to limit them. Although the present application has been described in detail with reference to the foregoing embodiments, those of ordinary skill in the art should understand that they may still modify the technical solutions described in the foregoing embodiments or equivalently substitute some or all of the technical features. Such modifications or substitutions do not cause the essence of the corresponding technical solutions to depart from the scope of the technical solutions of the embodiments of the present application.

## Claims

1. An airplane cabin door protection apparatus, wherein comprises:
a deployment mechanism, the deployment mechanism comprises a deployment portion and a power conversion portion, one end of the deployment portion is configured to connect to a bridgehead platform, and the power conversion portion is connected to the deployment portion;
a return mechanism, the return mechanism comprises a return power source and a return linkage portion, one end of the return power source is configured to connect to the bridgehead platform, and the other end of the return power source is connected to the return linkage portion, such that the return linkage portion contacts and drives the deployment portion to retract and causes the power conversion portion to store power; the power conversion portion is capable of releasing power to enable the deployment portion to extend;
a detection element, the detection element is configured to detect a downward motion signal after the deployment portion extends out to determine whether an airplane cabin door protection action is triggered.

2. The airplane cabin door protection apparatus according to claim 1, wherein further comprises a mounting frame configured to connect to the bridgehead platform, and the deployment portion, the return linkage portion, and the return power source are all connected to the mounting frame.

3. The airplane cabin door protection apparatus according to claim 2, wherein the deployment portion comprises an extension portion and a connection portion, the extension portion is at one end of the connection portion, the other end of the connection portion is movably connected to the mounting frame, and the return linkage portion cooperates with the connection portion to drive the extension portion to move.

4. The airplane cabin door protection apparatus according to claim 3, wherein the power conversion portion comprises an elastic member, one end of the elastic member is connected to the mounting frame, and the other end of the elastic member is connected to the connection portion;
or,
the power conversion portion comprises a counterweight structure, the counterweight structure is connected to the connection portion and configured to drive the connection portion to move, causing the extension portion to extend.

5. The airplane cabin door protection apparatus according to claim 3, wherein one end of the return power source is hinged to the mounting frame, the other end of the return power source is connected to the return linkage portion, and the return linkage portion cooperates with the connection portion to drive the deployment portion to move.

6. The airplane cabin door protection apparatus according to claim 3, wherein the return linkage portion is provided with a pressure-retaining portion, the pressure-retaining portion is configured to abut at least part of the deployment portion, such that the return linkage portion drives the deployment portion to move and causes the power conversion portion to store power.

7. The airplane cabin door protection apparatus according to claim 6, wherein the deployment portion further comprises a linkage engagement portion connected to the connection portion; a lower surface of the return linkage portion is provided with a groove, the pressure-retaining portion being a bottom of the groove of the return linkage portion, and the bottom of the groove is configured to abut an upper surface of the linkage engagement portion.

8. The airplane cabin door protection apparatus according to claim 6, wherein the deployment portion further comprises a linkage engagement portion disposed on the connection portion, the linkage engagement portion comprises a notch; the pressure-retaining portion being a stop rod, and an outer surface of the stop rod is configured to abut the notch.

9. The airplane cabin door protection apparatus according to any one of claims 1 to 8, wherein further comprises a second sensor below the detection element, the second sensor is configured to acquire a motion signal of the deployment portion moving to an activation position during extension to activate an airplane cabin door protection function.

10. The airplane cabin door protection apparatus according to any one of claims 1 to 8, wherein further comprises a third sensor configured to detect the return mechanism being in a first preset stop position corresponding to the deployment portion being extended;
and/or, further comprises a fourth sensor configured to detect the return mechanism being in a second preset stop position corresponding to the deployment portion being retracted.

11. The airplane cabin door protection apparatus according to any one of claims 1 to 8, wherein further comprises a first limiter configured to limit a maximum extension height of the deployment portion;
and/or, further comprises a second limiter configured to support and limit the deployment portion in a retracted position.

12. The airplane cabin door protection apparatus according to any one of claims 1 to 8, wherein the return power source comprises a reciprocating drive mechanism, a torque motor, or a cable reel;
and/or, the deployment portion is provided with a bumper for contacting an airplane cabin door.

13. A bridgehead, wherein comprises a bridgehead platform and the airplane cabin door protection apparatus according to any one of claims 1 to 12, the airplane cabin door protection apparatus is installed on the bridgehead platform, and a floor surface of the bridgehead platform is provided with an opening for the deployment portion to extend.

14. An aviation ground device, wherein comprises a control system and the airplane cabin door protection apparatus according to any one of claims 1 to 12.

15. An airplane cabin door protection method, wherein comprises following steps:
acquiring a deployment control command, a return power source responding to the deployment control command to extend a deployment portion;
acquiring a trigger signal from a detection element to determine an airplane cabin door protection action is triggered, and issuing a door protection action execution command when the airplane cabin door protection action is triggered;
acquiring a retraction control command, the return power source responding to the retraction control command to retract the deployment portion.

16. The airplane cabin door protection method according to claim 15, wherein before the step of acquiring the trigger signal from the detection element, the method further comprises:
acquiring an activation signal to determine an airplane cabin door protection function is activated.

17. The airplane cabin door protection method according to claim 16, wherein the acquiring the activation signal to determine the airplane cabin door protection function is activated comprises:
acquiring the activation signal through the detection element;
or, acquiring the activation signal through a second sensor.

18. An electronic device, wherein comprises a storage unit and a processing unit, the storage unit is configured to store program code, and the processing unit is configured to invoke the program code to execute the airplane cabin door protection method according to any one of claims 15 to 17.
